# EUROPÄISCHE PATENTSCHRIFT

(11) **EP 4 418 532 B1**
(45) Veröffentlichungstag und Bekanntmachung des Hinweises auf die Patenterteilung: **25.11.2026**
(21) Anmeldenummer: 23157071.4
(22) Anmeldetag: 16.02.2023
(51) Int. Cl.: H02S 20/24

(54) **AUFSTELLER ZUR AUFSTELLUNG VON WENIGSTENS EINEM SOLARMODUL AUF EINEM UNTERGRUND, VERFAHREN ZUR ANORDNUNG VON WENIGSTENS EINEM SOLARMODUL AN EINEM SOLCHEN AUFSTELLER**
DEVICE FOR POSITIONING AT LEAST ONE SOLAR MODULE ON A BASE, METHOD FOR ARRANGING AT LEAST ONE SOLAR MODULE ON SUCH A BASE
SUPPORT POUR LA POSE D'AU MOINS UN MODULE SOLAIRE SUR UN SOUS-SOL, PROCÉDÉ DE DISPOSITION D'AU MOINS UN MODULE SOLAIRE SUR UN TEL SUPPORT

(43) Veröffentlichungstag der Anmeldung: 21.08.2024
(73) Patentinhaber: GPI Beteiligungs GmbH, 48431 Rheine (DE)
(72) Erfinder: BRINKMANN, Manfred, 48431 Rheine (DE)
(74) Vertreter: Berkenbrink, Kai-Oliver

(56) Entgegenhaltungen:
- EP-A1- 1 833 098
- EP-A1- 2 447 620
- EP-A2- 2 040 014
- DE-B3- 102007 045 554

## Beschreibung

Die Erfindung betrifft einen Aufsteller zur Aufstellung von wenigstens einem Solarmodul auf einem Untergrund, ein Verfahren zur Anordnung von wenigstens einem Solarmodul an einem solchen Aufsteller sowie ein System aus einem Aufsteller zur Aufstellung von wenigstens einem Solarmodul auf einem Untergrund und einem an dem Aufsteller angeordneten Solarmodul.

Ein Solarmodul, das auch als Photovoltaikmodul oder Solarpaneel bezeichnet wird, wandelt das Licht der Sonne in elektrische Energie um. Das Modul umfasst Solarzellen, die zwischen Platten eingebettet sind, wobei eine der Platten transparent für das Licht der Sonne ist, so dass das Licht der Sonne durch diese Platte auf die Solarzellen fallen kann. Die Solarzellen und die Platten sind von einem Metallrahmen mit einer rechteckigen Außenkontur umfasst. Ein Solarmodul weist damit die Form einer Platte mit einer rechteckigen Außenkontur auf. Damit liegen sich jeweils zwei der Außenkanten des Solarmoduls parallel gegenüber.

Zur Aufstellung solcher Solarmodule auf einem Untergrund werden sogenannte Aufsteller verwendet, die teilweise auch als Aufständerung, Montagesystem oder Halterung für Solarmodule bezeichnet werden. Ein oder mehrere Solarmodule sind an einem solchen Aufsteller anordenbar und über den Aufsteller auf einem Untergrund aufstellbar. Bevorzugt sind Solarmodule in einer schrägen Ausrichtung zum Untergrund an dem Aufsteller anordenbar, so dass das Solarmodul in einem vorteilhaften Winkel zur Sonne ausrichtbar ist. Um die Standsicherheit des Aufstellers, insbesondere bei Windlast, zu vermeiden, kann der Aufsteller über Beschwerungsmittel beschwert oder am Untergrund befestigbar sein.

Die Anordnung und Befestigung von Solarmodulen an solchen Aufstellern ist mit den aus dem Stand der Technik bekannten Aufstellern häufig kompliziert. In der Regel werden die Solarmodule mittels eines Systems aus Metallschienen, Klemmen und Verschraubungen am Aufsteller befestigt. Die Herstellung und Anwendung eines solchen Systems ist aufwendig und komplex.

EP 1 833 098 A1 offenbart einen Träger zum Stützen eines Solarpaneels, bei dem eine Seite des Trägers elastisch verformbar ist, so dass das Solarpaneel durch Verformung des Trägers an diesem festlegbar ist.

Der Erfindung liegt die Aufgabe zugrunde, einen Aufsteller zur Aufstellung von wenigstens einem Solarmodul auf einem Untergrund zur Verfügung zu stellen, durch den ein Solarmodul einfach und sicher an dem Aufsteller befestigbar ist.

Zur Lösung dieser Aufgabe wird erfindungsgemäß zur Verfügung gestellt ein Aufsteller zur Aufstellung von wenigstens einem Solarmodul auf einem Untergrund, wobei der Aufsteller die folgenden Merkmale umfasst:
einen auf einem Untergrund aufstellbaren Aufstellkörper, umfassend
einen ersten Befestigungsabschnitt und
einen zweiten Befestigungsabschnitt; wobei
der erste Befestigungsabschnitt zur Anordnung einer ersten Kante eines Solarmoduls und
der zweite Befestigungsabschnitt zur Anordnung einer zweiten Kante, der ersten Kante gegenüberliegenden Kante des Solarmoduls ausgebildet ist;
erste Befestigungsmittel, durch die die erste Kante des Solarmoduls am ersten Befestigungsabschnitt befestigbar ist; und
zweite Befestigungsmittel, durch die die zweite Kante des Solarmoduls am zweiten Befestigungsabschnitt befestigbar ist; wobei
die zweiten Befestigungsmittel in eine erste Position und in eine zweite Position schwenkbar sind; und wobei

die zweite Kante des Solarmoduls durch die zweiten Befestigungsmittel nicht am zweiten Befestigungsabschnitt befestigbar ist, wenn die zweiten Befestigungsmittel in die erste Position geschwenkt sind; und wobei
die zweite Kante des Solarmoduls durch die zweiten Befestigungsmittel am zweiten Befestigungsabschnitt befestigbar ist, wenn die zweiten Befestigungsmittel in die zweite Position geschwenkt sind; und wobei
der Aufsteller durch das weitere Merkmal nach Anspruch 1 gekennzeichnet ist.

Ein Kerngedanke der Erfindung besteht darin, ein Solarmodul durch schwenkbare Befestigungsmittel an dem Aufsteller zu befestigen. Hierzu weist ein erfindungsgemäßer Aufsteller schwenkbare Befestigungsmittel auf, die in eine Position schwenkbar sind, in der wenigstens eine Kante des Solarmoduls am Aufsteller befestigt ist. Überraschend hat sich erfindungsgemäß herausgestellt, dass ein Solarmodul über solch schwenkbare Befestigungsmittel besonders einfach und sicher an einem Aufsteller befestigbar ist. Insbesondere lassen sich solch schwenkbare Befestigungsmittel besonders schnell und einfach von einer ersten Position, in der eine Kante des Solarmoduls nicht am Aufsteller befestigt ist, in eine zweite Position schwenken, in der die Kante des Solarmoduls am Aufsteller befestigt ist. Ferner lassen sich solch schwenkbare Befestigungsmittel jedoch insbesondere auch wiederum besonders schnell und einfach in die erste Position schwenken, so dass ein zuvor am Aufsteller befestigtes Solarmodul wieder schnell und einfach vom Aufsteller gelöst werden kann, beispielsweise um dieses auszutauschen oder um den rückseitigen Bereich des Solarmoduls erreichen zu können, beispielsweise um an die Stromkabel des Solarmoduls zu gelangen.

Die schwenkbaren Befestigungsmittel des erfindungsgemäßen Aufstellers, die hierin als "zweite Befestigungsmittel" bezeichnet werden, sind bevorzugt um eine Achse, insbesondere eine Schwenk- bzw. Drehachse, schwenkbar bzw. drehbar. Bevorzugt sind die zweiten Befestigungsmittel am zweiten Befestigungsabschnitt des Aufstellkörpers angeordnet. Die Anordnung unmittelbar am zweiten Befestigungsabschnitt des Aufstellkörpers hat insbesondere den Vorteil, dass neben dem Aufstellkörper und den zweiten Befestigungsmitteln keine weitere Elemente benötigt werden, um eine Kante des Solarmoduls, die hierin als zweite Kante des Solarmoduls bezeichnet wird, am zweiten Befestigungsabschnitt des Aufstellkörpers zu befestigen. Nach einer bevorzugten Ausführungsform kann vorgesehen sein, dass die zweiten Befestigungsmittel jeweils einen ersten Abschnitt und einen zweiten Abschnitt umfassen. Der erste Abschnitt kann am zweiten Befestigungsabschnitt drehbar befestigt sein. Der zweite Abschnitt kann vom ersten Abschnitt abstehen und derart gegen die zweite Kante des Solarmoduls oder von dieser weggeschwenkt sein, dass die zweite Kante des Solarmoduls am zweiten Befestigungsabschnitt befestigt ist oder nicht. Der zweite Abschnitt kann insoweit beispielsweise als Bügel oder Steg ausgebildet sein, der gegen die zweite Kante des Solarmoduls schwenkbar und dort festlegbar ist. Die zweiten Befestigungsmittel liegen jeweils in Form eines Schwenkverschlusses bzw. Schwenkhebels vor.

Der Aufstellkörper des erfindungsgemäßen Aufstellers ist auf einem Untergrund aufstellbar. Bei diesem Untergrund kann es sich beispielsweise um ein Flachdach oder einen sonstigen Untergrund handeln, auf dem ein Solarmodul über den Aufsteller angeordnet werden soll. Der Aufstellkörper umfasst den ersten Befestigungsabschnitt und den zweiten Befestigungsabschnitt, an denen ein Solarmodul mit seinen gegenüberliegenden Kanten anordenbar und befestigbar ist. Nach einer besonders bevorzugten Ausführungsform ist der Aufstellkörper einstückig ausgebildet, also einteilig. Der Aufstellkörper, einschließlich seines ersten und zweiten Befestigungsabschnittes, besteht also aus einem einzigen Stück bzw. Teil. Dies hat insbesondere den Vorteil einer besonders einfachen Herstellung und Handhabung des Aufstellkörpers. Bevorzugt ist der Aufstellkörper aus Metall oder aus Kunststoff ausgebildet.

Soweit der Aufstellkörper aus Kunststoff ausgebildet ist, insbesondere als einstückiges Kunststoffteil, kann der Aufstellkörper bevorzugt durch Tiefziehen hergestellt sein. Insoweit ist ein aus Kunststoff ausgebildeter Aufstellkörper bevorzugt als einstückiges Kunststoff-Tiefziehteil ausgebildet.

Besonders bevorzugt ist der Aufstellkörper jedoch aus Metall ausgebildet, besonders bevorzugt aus Aluminium. Bevorzugt ist ein aus Aluminium ausgebildeter Aufstellkörper durch Stanzung hergestellt. Besonders bevorzugt ist ein aus Aluminium ausgebildeter Aufstellkörper danach als einstückiges Aluminiumstanzteil ausgebildet. Erfindungsgemäß hat sich überraschend herausgestellt, dass ein Aufstellkörper besonders einfach als ein solch einstückiges Aluminiumstanzteil ausbildbar ist. Ferner hat sich ein solch einstückiges Aluminiumstanzteil als besonders einfach handhabbar und robust erwiesen. Bevorzugt weist ein aus Aluminium ausgebildeter Aufstellkörper, insbesondere soweit dieser als einstückiges Aluminiumstanzteil ausgebildet ist, eine Blechdicke im Bereich von 2 bis 4 mm, insbesondere von 3 mm auf. Erfindungsgemäß hat sich herausgestellt, dass ein Aufstellkörper in einer solchen Blechdicke die zur Aufstellung eines Solarmoduls notwendige Festigkeit aufweist, gleichzeitig aber noch gut handhabbar ist.

Bevorzugt ist der Aufstellkörper derart ausgebildet, dass mehrere gleichartige Aufstellkörper übereinander stapelbar sind. Hierdurch können mehrere Aufstellkörper besonders einfach und platzsparend transportiert und gelagert werden.

Nach einer bevorzugten Ausführungsform weist der Aufstellkörper eine Profilierung auf, insbesondere eine U-förmige Profilierung, besonders bevorzugt mehrere parallel zueinander verlaufende, insbesondere U-förmige Profilierungen. Hierdurch kann die Steifigkeit des Aufstellkörpers wesentlich verbessert werden. Bevorzugt erstrecken sich die Profilierungen zwischen dem ersten und dem zweiten Befestigungsabschnitt und verlaufen bevorzugt rechtwinklig zu diesen. Hierdurch kann dem Aufstellkörper eine besonders hohe Steifigkeit verliehen werden.

Nach einer Ausführungsform kann vorgesehen sein, dass der Aufstellkörper Öffnungen bzw. Durchbrechungen aufweist. Diese Öffnungen bzw. Durchbrechungen können bevorzugt zwischen einzelnen Profilierungen vorgesehen sein. Diese Öffnungen haben zum einen den Vorteil einer Hinterlüftung des Aufstellers, die einer Bildung von Kondenswasser im Raum zwischen Aufstellkörper und Solarmodul entgegenwirkt. Zum anderen kann hierdurch jedoch auch eine erhebliche Material- und Gewichtseinsparung am Aufstellkörper erzielt werden. Erfindungsgemäß hat sich herausgestellt, dass durch das Vorhandensein solcher Öffnungen die Festigkeit und Steifigkeit des Aufstellkörpers nicht wesentlich beeinträchtigt wird.

Der Aufstellkörper kann Ausformungen aufweisen, die zur Halterung und Führung von Elektrokabeln dienen können.

Nach einer besonders bevorzugten Ausführungsform ist der Aufstellkörper derart ausgebildet, dass der erste Befestigungsabschnitt tiefer verläuft als der zweite Befestigungsabschnitt, wenn der Aufstellkörper auf einem Untergrund aufgestellt ist. Ein "Untergrund" bedeutet in diesem Fall insbesondere ein ebener, also horizontal verlaufender Untergrund. Der besondere Vorteil einer solchen Ausführungsform besteht insbesondere darin, dass ein an dem Aufstellkörper angeordnetes Solarmodul zwangsläufig in einer zum Untergrund schrägen Anordnung angeordnet ist. Hierdurch kann das Solarmodul optimal zur Sonne ausgerichtet sein. Der gewünschte Winkel des Solarmoduls zum Untergrund kann durch die konkrete Dimensionierung des Aufstellkörpers bzw. den Höhenunterschied zwischen erstem Befestigungsabschnitt und zweitem Befestigungsabschnitt eingestellt werden.

Der Aufstellkörper umfasst bevorzugt einen zentralen Abschnitt, der auf einem Untergrund aufstellbar ist. Dieser zentrale Abschnitt kann beispielsweise durch Beschwerungsmittel, wie beispielsweise Betonplatten, beschwert werden, um einen sicheren Stand des Aufstellkörpers auf einem Untergrund zu gewährleisten. Ferner kann der zentrale Abschnitt beispielsweise auch Öffnungen aufweisen, durch die Befestigungsmittel, wie beispielsweise Schrauben oder dergleichen, zur Befestigung des Aufstellkörpers an einem Untergrund geführt werden können.

Nach einer bevorzugten Ausführungsform kann vorgesehen sein, dass der Aufstellkörper einen zentralen Abschnitt, einen ersten seitlichen Abschnitt und einen zweiten seitlichen Abschnitt umfasst, wobei der erste seitliche Abschnitt und der zweite seitliche Abschnitt an gegenüberliegenden Seiten des zentralen Abschnitts von diesem abstehen, wobei der erste Befestigungsabschnitt am ersten seitlichen Abschnitt und der zweite Befestigungsabschnitt am zweiten seitlichen Abschnitt angeordnet sind und wobei der zentrale Abschnitt auf einem Untergrund aufstellbar ist.

Eine solche Ausführungsform hat insbesondere auch den Vorteil, dass der Aufstellkörper zum einen besonders einfach gestaltbar ist und gleichzeitig bereits sämtliche Elemente zur Anordnung eines Solarmoduls an dem Aufstellkörper umfasst.

Bevorzugt stehen der erste seitliche Abschnitt und der zweite seitliche Abschnitt jeweils schräg in entgegengesetzte Richtungen vom zentralen Abschnitt ab, insbesondere jeweils in entgegengesetzte Richtungen schräg nach oben vom zentralen Abschnitt ab, wenn der zentrale Abschnitt auf einem Untergrund, insbesondere einem ebenen Untergrund, aufliegt.

Der erste Abschnitt kann einen ersten Auflagebereich umfassen, auf den ein Solarmodul im Bereich seiner ersten Kante auflegbar ist. Entsprechend kann der zweite Abschnitt ebenfalls einen zweiten Bereich umfassen, auf den ein Solarmodul im Bereich einer zweiten, der ersten Kante des Solarmoduls gegenüberliegenden Kante, auflegbar ist. Dies hat insbesondere den Vorteil, dass ein an dem Aufstellkörper anzuordnendes Solarmodul - vor seiner endgültigen Befestigung am Aufstellkörper - besonders einfach und für einen Benutzer ergonomisch am Aufstellkörper anordenbar ist.

Nach einer Ausführungsform kann vorgesehen sein, dass der erste seitliche Abschnitt eine erste Außenkante und der zweite seitliche Abschnitt eine zweite Außenkante aufweist und wobei der erste Befestigungsabschnitt im Bereich der ersten Außenkante und der zweite Befestigungsabschnitt im Bereich der zweiten Außenkante angeordnet ist.

Nach einer Fortbildung dieses Erfindungsgedankens kann bevorzugt vorgesehen sein, dass der erste Befestigungsabschnitt den ersten Bereich des ersten seitlichen Abschnitts nach außen hin - also vom Aufstellkörper weg - begrenzt und der zweite Befestigungsabschnitt den zweiten Bereich des zweiten seitlichen Abschnitts ebenfalls nach außen hin - also vom Aufstellkörper weg - begrenzt.

Bevorzugt verlaufen der erste Befestigungsabschnitt und der zweite Befestigungsabschnitt parallel zueinander. Gemäß der vorbezeichneten Ausführungsform kann entsprechend bevorzugt vorgesehen sein, dass die erste Außenkante und die zweite Außenkante parallel zueinander verlaufen. Dies hat insbesondere den Vorteil einer besonders einfachen Anordnung und Befestigung eines Solarmoduls am Aufstellkörper, da der Verlauf der ersten und zweiten Außenkante bzw. des ersten und zweiten Befestigungsabschnitts an die Dimensionen der gegenüberliegenden Außenkanten des Solarmoduls angepasst sein können.

Der erfindungsgemäße Aufsteller dient zur Aufstellung eines üblichen, tafelförmigen Solarmoduls mit einer rechteckigen Außenkontur. Ein solch tafelförmiges Solarmodul weist zwei Paare sich jeweils gegenüberliegender, parallel zueinander verlaufender Kanten auf. Ein Paar zweier sich solch gegenüberliegender Kanten eines Solarmoduls werden hierin als erste Kante des Solarmoduls und zweite Kante des Solarmoduls bezeichnet. Ein durch den erfindungsgemäßen Aufsteller anordenbares bzw. über diesen aufstellbares Solarmodul weist insoweit eine erste Kante und eine der ersten Kante gegenüberliegende, zweite Kante auf, wobei die erste Kante und die zweite Kante bevorzugt parallel zueinander verlaufen.

Der erste Befestigungsabschnitt des Aufstellkörpers ist zur Anordnung einer solchen ersten Kante eines Solarmoduls ausgebildet. Zur Befestigung der ersten Kante des Solarmoduls am ersten Befestigungsabschnitt weist dieser erste Befestigungsmittel auf. Nach einer Ausführungsform kann vorgesehen sein, dass diese ersten Befestigungsmittel entsprechend den hierin offenbarten zweiten Befestigungsmitteln ausgebildet sind und damit jeweils in eine erste Position und eine zweite Position schwenkbar sind, wobei die erste Kante des Solarmoduls nicht am ersten Befestigungsabschnitt befestigt ist, wenn die ersten Befestigungsmittel in die erste Position geschwenkt sind, und wobei die erste Kante des Solarmoduls am ersten Befestigungsabschnitt befestigt ist, wenn die ersten Befestigungsmittel in die zweite Position geschwenkt sind. In diesem Fall können nicht nur die ersten Befestigungsmittel entsprechend den zweiten Befestigungsmitteln, sondern auch der erste Befestigungsabschnitt entsprechend dem zweiten Befestigungsabschnitt gestaltet sein.

Nach einer besonders bevorzugten Ausführungsform ist das erste Befestigungsmittel jedoch im Aufstellkörper ausgeformt. Besonders bevorzugt ist das erste Befestigungsmittel einstückig im Aufstellkörper ausgeformt, also einteilig mit dem Aufstellkörper. Insbesondere kann das erste Befestigungsmittel einstückig mit dem ersten Befestigungsabschnitt ausgeformt sein bzw. einstückig mit diesem sein. Eine solche Ausführungsform hat insbesondere den Vorteil einer besonders einfachen Gestaltung des Aufstellers, da keine gesonderten ersten Befestigungsmittel notwendig sind, um die erste Kante des Solarmoduls am Aufstellkörper zu befestigen, sondern die ersten Befestigungsmittel bereits im Aufstellkörper ausgeformt sind. Nach einer besonders bevorzugten Ausführungsform kann das erste Befestigungsmittel als nutförmige Aufnahme bzw. als Nut ausgeformt sein. Besonders bevorzugt kann eine solche nutförmige Aufnahme, wie zuvor ausgeführt, im Aufstellkörper bzw. im zweiten Befestigungsabschnitt ausgeformt sein.

Bevorzugt ist die nutförmige Aufnahme derart dimensioniert, dass die erste Kante des Solarmoduls in die nutförmige Aufnahme aufnehmbar ist. Hierdurch ist die erste Kante des Solarmoduls besonders einfach und sicher am zweiten Befestigungsabschnitt aufnehmbar und befestigbar. Insoweit ist zur Aufnahme und Befestigung der ersten Kante des Solarmoduls die erste Kante des Solarmoduls allein in die nutförmige Aufnahme zu führen. Bevorzugt ist die nutförmige Aufnahme derart ausgebildet, dass die erste Kante des Solarmoduls durch Klemmung bzw. Reibschluss in der Aufnahme befestigbar ist. Diese Befestigung der ersten Kante durch Klemmung in der nutförmigen Aufnahme kann durch zusätzliche erste Klemmelemente weiter gefördert sein. Insoweit kann beispielsweise bevorzugt vorgesehen sein, dass der erfindungsgemäße Aufsteller erste Klemmelemente, wie beispielsweise Gummi- oder Kunststoffelemente, aufweist, die in der nutförmigen Aufnahme anordenbar sind und die die Klemmung bzw. den Reibschluss zwischen der ersten Kante und der nutförmigen Aufnahme fördern. Solch erste Klemmelemente können beispielsweise in Form von Gummi- oder Kunststoffplättchen vorgesehene sein, die zwischen die erste Kante und die nutförmige Aufnahme geklemmt sind. Ein besonderer Vorteil solch erster Klemmelemente besteht insbesondere auch darin, dass die erste Kante - ohne die ersten Klemmelemente - mit Spiel in der nutförmigen Aufnahme einliegen kann, was eine besonders einfache Anordnung des Solarmoduls in der Aufnahme erlaubt, da diese hierdurch ohne besondere Kraftanstrengung und ohne die Gefahr einer Verkantung in die nutförmige Aufnahme bewegt werden kann. Die ersten Klemmelemente dienen insoweit dann allein dazu, die mit Spiel in der nutförmigen Aufnahme einliegende erste Kante des Solarmoduls unter Klemmung in dieser zu befestigen.

Mit seiner der ersten Kante gegenüberliegenden zweiten Kante ist das Solarmodul im Bereich des zweiten Befestigungsabschnitts anordenbar und über die zweiten Befestigungsmittel dort befestigbar.

Nach einer Ausführungsform kann vorgesehen sein, dass im Bereich des zweiten Befestigungsabschnitts eine Anschlagkante ausgeformt ist, gegen die das Solarmodul mit seiner zweiten Kante anschlagbar ist. Bevorzugt kann eine solche Anschlagkante einstückig im Aufstellkörper bzw. zweiten Befestigungsabschnitt ausgeformt sein, also einteilig mit diesem sein. Eine solche Anschlagkante im Bereich des zweiten Befestigungsabschnitts kann die Ausrichtung des Solarmoduls im Aufstellkörper erleichtern.

Wie zuvor ausgeführt, sind die zweiten Befestigungsmittel bevorzugt am zweiten Befestigungsabschnitt angeordnet. Nach einer Ausführungsform kann vorgesehen sein, dass die zweiten Befestigungsmittel an der vorbezeichneten Anschlagkante des zweiten Befestigungsabschnitts angeordnet sind. Dies erlaubt eine besonders einfache Ausrichtung, Anordnung und Befestigung des Solarmoduls am Aufstellkörper.

Bevorzugt sind die zweiten Befestigungsmittel derart ausgebildet, dass die zweite Kante des Solarmoduls durch Klemmung bzw. Reibschluss befestigbar ist. Diese Befestigung der zweiten Kante durch Klemmung mittels der zweiten Befestigungsmittel kann durch zusätzliche zweite Klemmelemente weiter gefördert sein. Insoweit kann beispielsweise bevorzugt vorgesehen sein, dass der erfindungsgemäße Aufsteller zweite Klemmelemente, wie beispielsweise Gummi- oder Kunststoffelemente, aufweist, die zwischen den zweiten Befestigungsmitteln und der zweiten Kante anordenbar sind und die die Klemmung bzw. den Reibschluss zwischen der zweiten Kante und den zweiten Befestigungsmitteln fördern. Solch zweite Klemmelemente können beispielsweise in Form von Gummi- oder Kunststoffplättchen vorgesehene sein, die zwischen die zweite Kante und die zweiten Befestigungsmittel geklemmt sind. Ein besonderer Vorteil solch erster Klemmelemente besteht insbesondere auch darin, dass ein gewisses Spiel zwischen der zweiten Kante und den zweiten Befestigungsmitteln ausgeglichen werden kann, was die besonders einfache Befestigung von Solarmodulen unterschiedlicher Dicke mittels des Aufstellers ermöglicht. Auch können solche zweiten Klemmmittel ein Verkratzen des Solarmoduls durch die Drehbewegung der zweiten Befestigungsmittel verhindern. Soweit die zweiten Befestigungsmittel, wie oben ausgeführt, in Form eines Schwenkverschlusses bzw. Schwenkhebels vorliegen, insbesondere mit einen ersten, drehbar befestigten Abschnitt und einem zweiten, gegen die zweite Kante des Solarmoduls festlegbaren Abschnitt, können die zweiten Klemmmittel bevorzugt zwischen dem zweiten Abschnitt und der zweiten Kante des Solarmoduls anordenbar sein.

Ein erfindungsgemäßer Aufsteller kann zur Anordnung und Befestigung von einem oder mehreren Solarmodulen dienen. Nach einer Ausführungsform können mehrere erfindungsgemäße Aufsteller zu einem System erfindungsgemäßer Aufsteller verbunden sein. Dabei können mehrere der erfindungsgemäßen Aufsteller nebeneinander angeordnet sein. Nach einer Ausführungsform kann dabei vorgesehen sein, dass ein Solarmodul gleichzeitig an zwei Aufstellern befestigt ist.

Gegenstand der Erfindung ist auch ein Verfahren zur Anordnung von wenigstens einem Solarmodul an wenigstens einem erfindungsgemäßen Aufsteller, wobei das Verfahren die folgenden Merkmale umfasst:
Zurverfügungstellung wenigstens eines erfindungsgemäßen Aufstellers;
Zurverfügungstellung wenigstens eines Solarmoduls;
Anordnen der ersten Kante des Solarmoduls am ersten Befestigungsabschnitt und Anordnen der zweiten Kante des Solarmoduls am zweiten Befestigungsabschnitt;
Befestigen der ersten Kante des Solarmoduls am ersten Befestigungsabschnitt mittels der ersten Befestigungsmittel; und
Befestigen der zweiten Kante des Solarmoduls am zweiten Befestigungsabschnitt mittels der zweiten Befestigungsmittel durch Schwenken der zweiten Befestigungsmittel von der ersten Position in die zweite Position.

Das wenigstens eine Solarmodul kann wie hierin offenbart ausgebildet sein.

Wie hierin ausgeführt, befinden sich die zweiten Befestigungsmittel am zweiten Befestigungsabschnitt bevorzugt in der ersten Position, wenn die zweite Kante des Solarmoduls am zweiten Befestigungsabschnitt angeordnet wird, und werden, wenn die zweite Kante am zweiten Befestigungsabschnitt angeordnet ist, zur Befestigung der zweiten Kante anschließend in die zweite Position geschwenkt.

Gleiches gilt entsprechend für den ersten Befestigungsabschnitt, wenn dieser Befestigungsmittel umfasst, die gemäß den hierin offenbarten zweiten Befestigungsmitteln ausgebildet sind.

Gegenstand der Erfindung ist auch ein System aus wenigstens einem erfindungsgemäßen Aufsteller und wenigstens einem Solarmodul.

Gegenstand der Erfindung ist insoweit ebenfalls ein System aus einem Aufsteller zur Aufstellung von wenigstens einem Solarmodul auf einem Untergrund und einem an dem Aufsteller angeordneten Solarmodul, wobei das System die folgenden Merkmale umfasst:
wenigstens ein Solarmodul; und
einen auf einem Untergrund aufstellbaren Aufstellkörper, umfassend
einen ersten Befestigungsabschnitt; und
einen zweiten Befestigungsabschnitt; wobei
der erste Befestigungsabschnitt zur Anordnung einer ersten Kante des Solarmoduls und
der zweite Befestigungsabschnitt zur Anordnung einer zweiten Kante, der ersten Kante gegenüberliegenden Kante des Solarmoduls ausgebildet ist; wobei
das Solarmodul mit der ersten Kante am ersten Befestigungsabschnitt aufgenommen ist und
mit seiner zweiten Kante am zweiten Befestigungsabschnitt aufgenommen ist;
erste Befestigungsmittel, durch die die erste Kante des Solarmoduls am ersten Befestigungsabschnitt befestigbar ist; und
zweite Befestigungsmittel, durch die die zweite Kante des Solarmoduls am zweiten Befestigungsabschnitt befestigbar ist; wobei
   die zweiten Befestigungsmittel in eine erste Position und in eine zweite Position schwenkbar sind; und wobei
die zweite Kante des Solarmodul durch die zweiten Befestigungsmittel nicht am zweiten Befestigungsabschnitt befestigt ist, wenn die zweiten Befestigungsmittel in die erste Position geschwenkt sind; und wobei
die zweite Kante des Solarmoduls durch die zweiten Befestigungsmittel am zweiten Befestigungsabschnitt befestigt ist, wenn die zweiten Befestigungsmittel in die zweite Position geschwenkt sind.

Der wenigstens eine Aufsteller und das wenigstens eine Solarmodul des erfindungsgemäßen Systems können ebenfalls gemäß dem hierin offenbarten Aufsteller und Solarmodul ausgebildet sein.

Weitere Merkmale der Erfindung ergeben sich aus den Ansprüchen, den beigefügten Figuren und der zugehörigen Figurenbeschreibung.

Sämtliche Merkmale der Erfindung können, einzeln oder in Kombination, beliebig miteinander kombiniert sein.

In den Figuren werden Ausführungsbeispiele der Erfindung näher erläutert.

Dabei zeigt
- Figur 1: einen Aufsteller in einer ersten Ausführungsform in einer perspektivischen Ansicht von schräg oben;
- Figur 2: den Aufsteller nach Figur 1 in einer seitlichen Ansicht;
- Figur 3: ein System aus dem Aufsteller nach Figur 1 und einem daran angeordneten Solarmodul in einer perspektivischen Ansicht von schräg oben;
- Figur 4A: eine Detailansicht der Ansicht nach Figur 3 im Bereich des zweiten Befestigungsabschnitts;
- Figur 4B: eine weitere Detailansicht der Ansicht nach Figur 3 im Bereich des zweiten Befestigungsabschnitts;
- Figur 5: ein System aus mehreren Aufstellern gemäß Figur 1 mit einem daran angeordneten Solarmodul in einer perspektivischen Ansicht von schräg oben;
- Figur 6: das System nach Figur 5 mit mehreren daran angeordneten Solarmodulen;
- Figur 7: zwei aufeinandergestapelte Aufsteller gemäß Figur 1 in einer seitlichen Ansicht; und
- Figur 8: einen Aufsteller in einer zweiten Ausführungsform in einer perspektivischen Ansicht von schräg oben.

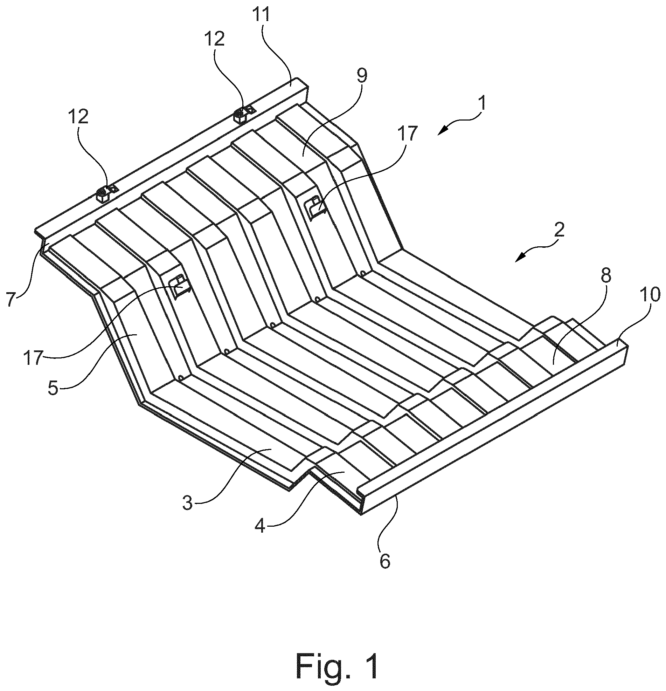

Figuren 1 bis 7 zeigen eine erste Ausführungsform eines erfindungsgemäßen Aufstellers.

Der Aufsteller gemäß Figur 1 ist in seiner Gesamtheit mit dem Bezugszeichen 1 gekennzeichnet. Der Aufsteller 1 umfasst einen auf einem Untergrund aufstellbaren Aufstellkörper 2. Der Aufstellkörper 2 umfasst einen zentralen Abschnitt 3, einen ersten seitlichen Abschnitt 4 und einen zweiten seitlichen Abschnitt 5, die an gegenüberliegenden Seiten des zentralen Abschnitts 3 schräg nach oben von diesem abstehen.

Der erste seitliche Abschnitt 4 weist eine erste Außenkante 6 und der zweite seitliche Abschnitt 5 weist eine zweite Außenkante 7 auf. Die erste Außenkante 6 und die zweite Außenkante 7 liegen sich an den endseitigen Bereichen des Aufstellkörpers gegenüber, verlaufen parallel zueinander und parallel zu dem Untergrund U, auf dem der Aufstellkörper 2 aufliegt.

Unmittelbar anschließend an die erste Außenkante 6 ist der erste Befestigungsabschnitt 8 und unmittelbar benachbart zur zweiten Außenkante 7 ist der zweite Befestigungsabschnitt 9 angeordnet. Der Aufstellkörper 2 ist dabei derart dimensioniert, dass, bei Aufstellung des Aufstellkörpers auf einem ebenen Untergrund, der erste Befestigungsabschnitt 8 tiefer verläuft als der zweite Befestigungsabschnitt 9.

Unmittelbar im Bereich der Kante 6 ist ein erstes Befestigungsmittel 10 in Form einer nutförmigen Aufnahme einstückig aus dem ersten Befestigungsabschnitt 8 ausgeformt. Die nutförmige Aufnahme 10 ist derart dimensioniert, dass in diese eine Kante eines Solarmoduls aufnehmbar ist.

Auf der gegenüberliegenden Seite des Aufstellkörpers 2 ist ebenfalls unmittelbar an der zweiten Kante 7 eine Anschlagkante 11 für ein Solarmodul einstückig aus dem zweiten Befestigungsabschnitt 9 ausgeformt. An der Anschlagkante 11 sind zweite Befestigungsmittel in Form zweier gleichartig ausgebildeter Schwenkverschlüsse 12 angeordnet. Jeder der Schwenkverschlüsse 12 umfasst jeweils einen ersten Abschnitt 13, mit dem er schwenk- bzw. drehbar unmittelbar an der Anschlagkante 11 befestigt ist. Von diesem ersten Abschnitt 13 steht ein zweiter Abschnitt 14 ab, der durch Schwenkung bzw. Drehung des Schwenkverschlusses 12 gegen die zweite Kante 102 eines Solarmoduls 100 führbar und zur Befestigung des Solarmoduls 100 dort festlegbar ist.

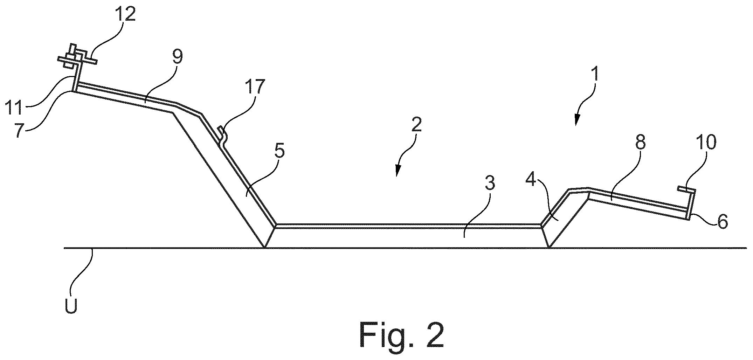

In der seitlichen Ansicht gemäß Figur 2 ist insbesondere gut zu erkennen, wie bei Aufstellung des Aufstellkörpers 2 auf einem ebenen Untergrund U der erste Befestigungsabschnitt 8 mit der nutförmigen Aufnahme 10 tiefer angeordnet ist als der zweite Befestigungsabschnitt 9 mit der daran angeordneten Anschlagkante 11.

Das Solarmodul 100 ist durch Klemmung bzw. Reibschluss fest an dem Aufsteller 1 befestigt. Zur Förderung der Klemmung bzw. des Reibschlusses der ersten Kante 101 des Solarmoduls 100 in der nutförmigen Aufnahme 10 sind den Reibschluss verbessernde erste Klemmelemente 201 in Form dünner Kunststoffplättchen zwischen die erste Kante 101 und die nutförmige Aufnahme 10 geklemmt. In gleicher Weise sind zur Förderung der Klemmung bzw. des Reibschlusses zwischen der zweiten Kante 102 des Solarmoduls 100 und den Schwenkverschlüssen 12 jeweils den Reibschluss verbessernde zweite Klemmelemente 202 in Form dünner Kunststoffplättchen zwischen die zweite Kante 102 und den jeweiligen zweiten Abschnitt 14 der Schwenkverschlüsse 12 geklemmt.

Zur Anordnung eines Solarmoduls 100 am Aufsteller 1 wird ein tafelförmiges Solarmodul 100 mit einer rechteckigen Außenkontur zur Verfügung gestellt. Das Solarmodul 100 weist eine erste Kante 101 und eine der ersten Kante 101 gegenüberliegende, parallel hierzu verlaufende zweite Kante 102 auf. Das Solarmodul 100 wird zunächst mit seiner ersten Kante 101 auf den ersten Befestigungsabschnitt 8 aufgelegt und mit der ersten Kante 101 anschließend in die nutförmige Aufnahme 10 geschoben, bis die erste Kante 101 gegen den Nutgrund der nutförmigen Aufnahme 10 anliegt. Das Einschieben der zweiten Kante 102 ist dadurch besonders einfach, dass die Nutbreite der nutförmige Aufnahme 10 größer ist als die Dicke der zweiten Kante 102, so dass diese zunächst mit Spiel in der nutförmige Aufnahme 10 einliegt. Anschließend wird das Solarmodul 100 mit seiner zweiten Kante 102 auf den zweiten Befestigungsabschnitt 9 aufgelegt. Der Aufstellkörper 2 ist derart dimensioniert, dass das Solarmodul 100 bei Aufnahme in den Aufstellkörper 2 mit seiner ersten Kante 101 gegen den Grund der nutförmigen Aufnahme 10 und mit seiner zweiten Kante 102 gegen die Anschlagkante 11 anliegt.

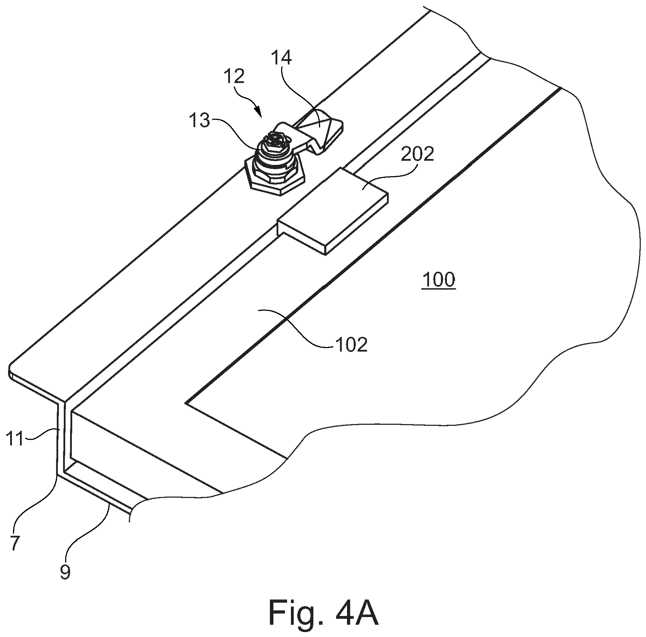

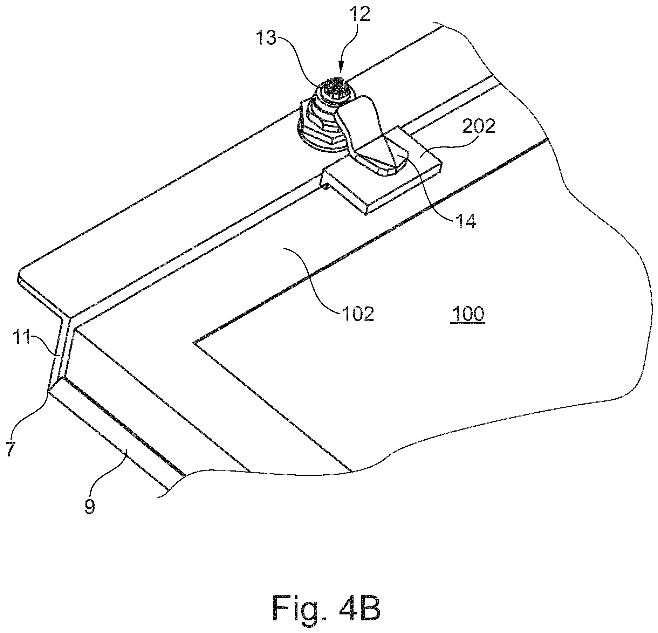

Zunächst befinden sich die zweiten Befestigungsmittel in Form der beiden Schwenkverschlüsse 12 dabei in der in Figur 4A dargestellten ersten Position. In dieser ersten Position ist der jeweils zweite Abschnitt 14 der Schwenkverschlüsse 12 vom Bereich des zweiten Befestigungsabschnitts 9 weggeschwenkt, so dass das Solarmodul 100 ohne weiteres am zweiten Befestigungsabschnitt 9 anordenbar ist. Anschließend werden die beiden Schwenkverschlüsse 12 in die in Figur 4B dargestellte, zweite Position geschwenkt, in der der zweite Abschnitt 14 der Schwenkverschlüsse 12 jeweils gegen die zweite Kante 102 des Solarmoduls 100 anliegt und das Solarmodul 100 hierdurch im Aufstellkörper 2 befestigt. Schließlich werden die ersten und zweiten Klemmelemente 201, 202, wie oben ausgeführt, angeordnet, um die reibschlüssige Befestigung des Solarmoduls 100 am Aufsteller 1 zu fördern.

Der Aufstellkörper 2 ist als einstückiges Aluminiumstanzteil mit einer Blechdicke von 3 mm ausgebildet. Der Aufstellkörper 2 und sämtliche seiner Komponenten, also insbesondere auch der zentrale Abschnitt 3, der erste seitliche Abschnitt 4, der zweite seitliche Abschnitt 5, der erste Befestigungsabschnitt 8, der zweite Befestigungsabschnitt 9, die nutförmige Aufnahme 10 sowie die Anschlagkante 11, sind damit einstückig als ein einziges Aluminiumstanzteil ausgebildet.

Zur Versteifung des Aufstellkörpers 2 weist dieser eine U-förmige Profilierung in Form von Rippen 15 auf, die von der ersten Außenkante 6 zur zweiten Außenkante 7 verlaufen. Zwischen den Rippen 15 sind Materialaussparungen 16 zur Hinterlüftung und Gewichtsreduzierung ausgebildet. Ferner sind an einigen der Rippen Ausformungen 17 zur Kabelführung ausgeformt.

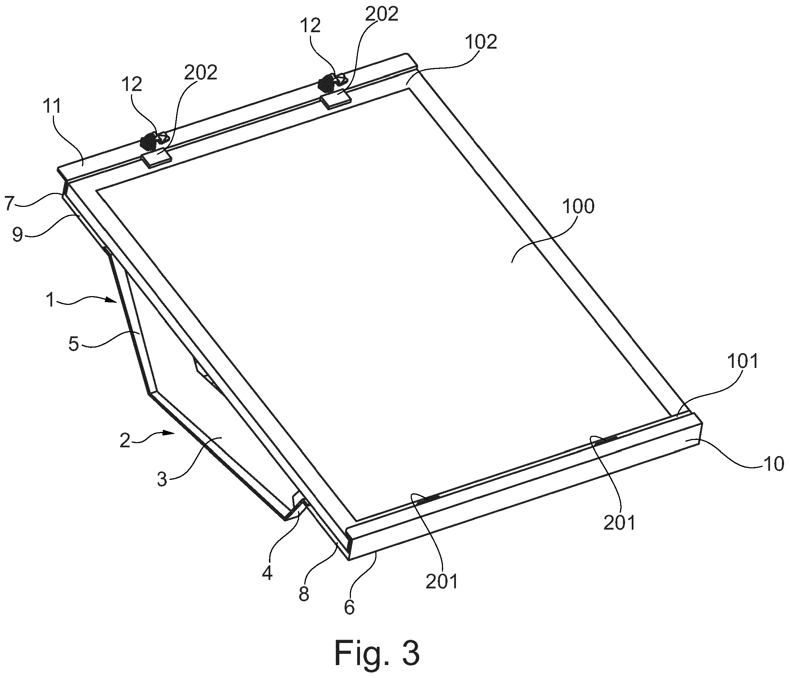

Ein System 200 aus einem Aufsteller 1 und einem daran angeordneten Solarmodul 100 ist in Figur 3 dargestellt.

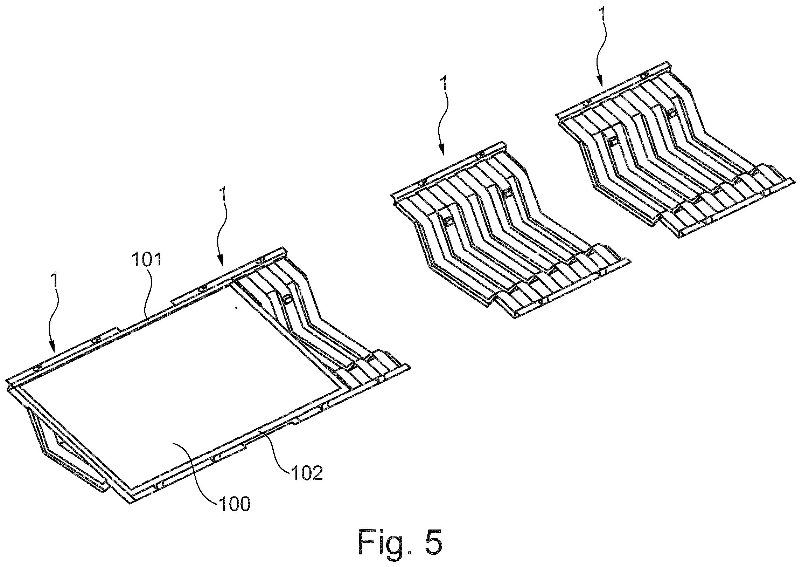

Im Ausführungsbeispiel gemäß Figur 5 sind mehrere Aufsteller 1 mit Abstand nebeneinander angeordnet. Dabei kann jeweils ein Solarmodul 100 an mehreren Aufstellern 1 angeordnet sein, indem jeweils ein Solarmodul 100 den Spalt zwischen zwei benachbarten Aufstellern 1 überbrückt und mit seiner ersten Kante 101 an nutförmigen Aufnahmen 10 benachbarter Aufsteller 1 und mit seiner zweiten Kante 102 über die Schwenkverschlüsse 12 an dem zweiten Befestigungsabschnitt 9 benachbarter Aufsteller 1 befestigt ist.

Der besseren Übersichtlichkeit halber ist in Figur 5 nur ein Solarmodul 100 dargestellt.

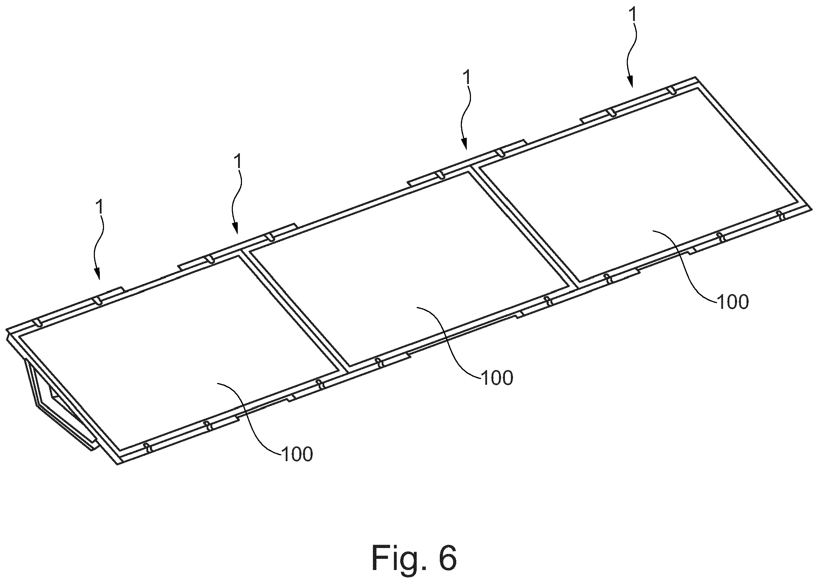

In der Darstellung nach Figur 6 sind drei Solarmodule 100 an vier benachbarten Aufstellern 1 angeordnet.

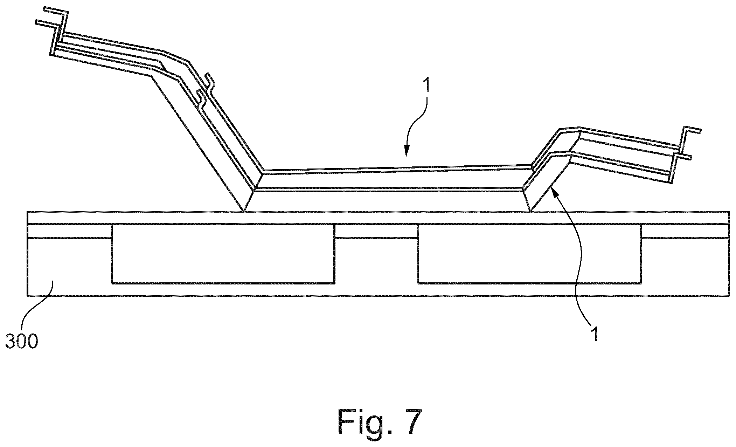

Der Aufsteller 1 ist derart dimensioniert, dass mehrere Aufsteller 1 sehr platzsparend übereinander stapelbar sind. Eine solche Stapelung von zwei Aufstellern 1 übereinander auf einer Europalette 300 ist in Figur 7 dargestellt.

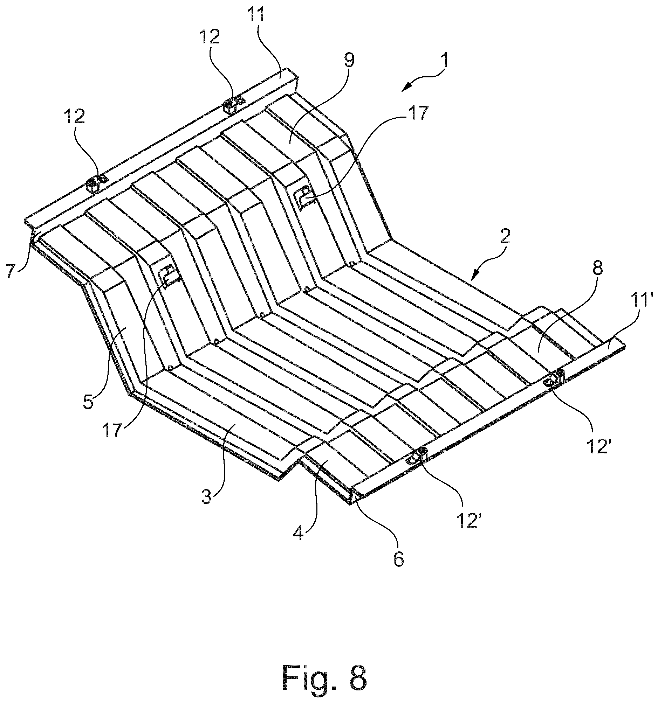

Figur 8 zeigt eine zweite Ausführungsform eines erfindungsgemäßen Aufstellers. Bei dem Aufsteller 1' gemäß Figur 8 sind Merkmale, die gleich oder gleichwirkend zu den Merkmalen des Aufstellers 1 nach den Figuren 1 bis 7 sind, mit den gleichen Bezugszeichen wie in den Figuren 1 bis 7 gekennzeichnet. Der Aufsteller gemäß Figur 8 ist in seiner Gesamtheit mit dem Bezugszeichen 1' gekennzeichnet. Er unterscheidet sich insoweit von dem Aufsteller 1 gemäß den Figuren 1 bis 7, als die zweiten Befestigungsmittel nicht in Form einer Nut, sondern in Form einer Anschlagkante 11' mit zwei daran angeordneten Schwenkverschlüssen 12' ausgebildet sind. Die ersten Befestigungsmittel sind demnach entsprechend den zweiten Befestigungsmitteln mit der Anschlagkante 11 und den daran angeordneten Schwenkverschlüssen 12 ausgebildet.

## Patentansprüche

1. Aufsteller (1) zur Aufstellung von wenigstens einem Solarmodul (100) auf einem Untergrund, wobei der Aufsteller (1) die folgenden Merkmale umfasst:
1.1 einen auf einem Untergrund aufstellbaren Aufstellkörper (2), umfassend
1.1.1 einen ersten Befestigungsabschnitt (8) und
1.1.2 einen zweiten Befestigungsabschnitt (9); wobei
1.1.3 der erste Befestigungsabschnitt (8) zur Anordnung einer ersten Kante (101) eines Solarmoduls (100) und
1.1.4 der zweite Befestigungsabschnitt (9) zur Anordnung einer zweiten Kante (102), der ersten Kante (101) gegenüberliegenden Kante des Solarmoduls (100) ausgebildet ist;
1.2 erste Befestigungsmittel (10), durch die die erste Kante (101) des Solarmoduls (100) am ersten Befestigungsabschnitt (8) befestigbar ist; und
1.3 zweite Befestigungsmittel (12), durch die die zweite Kante (102) des Solarmoduls (100) am zweiten Befestigungsabschnitt (9) befestigbar ist;
1.4 wobei die zweiten Befestigungsmittel (12) in eine erste Position und in eine zweite Position schwenkbar sind; und wobei
1.5 die zweite Kante (102) des Solarmoduls (100) durch die zweiten Befestigungsmittel (12) nicht am zweiten Befestigungsabschnitt (9) befestigbar ist, wenn die zweiten Befestigungsmittel (12) in die erste Position geschwenkt sind; und wobei
1.6 die zweite Kante (102) des Solarmoduls (100) durch die zweiten Befestigungsmittel am zweiten Befestigungsabschnitt (9) befestigbar ist, wenn die zweiten Befestigungsmittel (12) in die zweite Position geschwenkt sind;
**dadurch gekennzeichnet, dass**
1.7 die zweiten Befestigungsmittel in Form wenigstens eines Schwenkverschlusses (12) vorliegen.

2. Aufsteller (1) nach Anspruch 1, wobei der Aufstellkörper (2) einstückig ausgebildet ist.

3. Aufsteller (1) nach wenigstens einem der vorhergehenden Ansprüche, wobei der Aufstellkörper (2) als einstückiges Aluminiumstanzteil ausgebildet ist.

4. Aufsteller (1) nach wenigstens einem der vorhergehenden Ansprüche, wobei der erste Befestigungsabschnitt (8) tiefer verläuft als der zweite Befestigungsabschnitt (9), wenn der Aufstellkörper (2) auf einem Untergrund aufgestellt ist.

5. Aufsteller (1) nach wenigstens einem der vorhergehenden Ansprüche, wobei der Aufstellkörper (2) einen zentralen Abschnitt (3), einen ersten seitlichen Abschnitt (4) und einen zweiten seitlichen Abschnitt (5) umfasst, wobei der erste seitliche Abschnitt (4) und der zweite seitliche Abschnitt (5) an gegenüberliegenden Seiten des zentralen Abschnitts (3) von diesem abstehen, wobei der erste Befestigungsabschnitt (8) am ersten seitlichen Abschnitt (4) und der zweite Befestigungsabschnitt (9) am zweiten seitlichen Abschnitt (5) angeordnet sind und wobei der zentrale Abschnitt (3) auf einem Untergrund aufstellbar ist.

6. Aufsteller (1) nach Anspruch 5, wobei der erste seitliche Abschnitt (4) eine erste Außenkante (6) und der zweite seitliche Abschnitt (5) eine zweite Außenkante (7) aufweist und wobei der erste Befestigungsabschnitt (8) im Bereich der ersten Außenkante (6) und der zweite Befestigungsabschnitt (9) im Bereich der zweiten Außenkante (7) angeordnet ist.

7. Aufsteller (1) nach Anspruch 6, wobei die erste Außenkante (6) und die zweite Außenkante (7) parallel zueinander verlaufen.

8. Aufsteller (1) nach wenigstens einem der vorhergehenden Ansprüche, wobei das erste Befestigungsmittel (10) im Aufstellkörper (2) ausgeformt ist.

9. Aufsteller (1) nach wenigstens einem der vorhergehenden Ansprüche, wobei das erste Befestigungsmittel als nutförmige Aufnahme (10) ausgeformt ist.

10. Aufsteller (1) nach Anspruch 9, wobei die erste Kante (101) des Solarmoduls (100) in die nutförmige Aufnahme (10) aufnehmbar ist.

11. Aufsteller (1) nach wenigstens einem der vorhergehenden Ansprüche, wobei im Bereich des zweiten Befestigungsabschnitts (9) eine Anschlagkante (11) ausgeformt ist, gegen die ein Solarmodul (100) mit seiner zweiten Kante (102) anschlagbar ist.

12. Aufsteller (1) nach wenigstens einem der vorhergehenden Ansprüche, wobei die zweiten Befestigungsmittel am zweiten Befestigungsabschnitt (9) angeordnet sind.

13. Verfahren zur Anordnung von wenigstens einem Solarmodul (100) an einem Aufsteller (1) nach wenigstens einem der vorhergehenden Ansprüche, wobei das Verfahren die folgenden Merkmale umfasst:
A. Zurverfügungstellung eines Aufstellers (1) nach wenigstens einem der vorhergehenden Ansprüche;
B. Zurverfügungstellung wenigstens eines Solarmoduls (100);
C. Anordnen der ersten Kante (101) des Solarmoduls (100) am ersten Befestigungsabschnitt (8) und Anordnen der zweiten Kante (102) des Solarmoduls (100) am zweiten Befestigungsabschnitt (9);
D. Befestigen der ersten Kante (101) des Solarmoduls (100) am ersten Befestigungsabschnitt (8) mittels der ersten Befestigungsmittel; und
E. Befestigen der zweiten Kante (102) des Solarmoduls (100) am zweiten Befestigungsabschnitt (9) mittels der zweiten Befestigungsmittel (12) durch Schwenken der zweiten Befestigungsmittel (12) von der ersten Position in die zweite Position.

14. Aufsteller (1) nach wenigstens einem der Ansprüche 1 bis 12, ferner umfassend: 14.1 wenigstens ein Solarmodul (100); wobei
14.2 das Solarmodul (100) mit der ersten Kante (101) am ersten Befestigungsabschnitt (8) aufgenommen ist und
14.3 mit seiner zweiten Kante (102) am zweiten Befestigungsabschnitt (9) aufgenommen ist; und wobei
14.4 durch die ersten Befestigungsmittel (10) die erste Kante (101) des Solarmoduls (100) am ersten Befestigungsabschnitt (8) befestigbar ist; und
14.5 durch die zweiten Befestigungsmittel (12) die zweite Kante (102) des Solarmoduls (100) am zweiten Befestigungsabschnitt (9) befestigbar ist; wobei
14.6 die zweite Kante (102) des Solarmodul (100) durch die zweiten Befestigungsmittel (12) nicht am zweiten Befestigungsabschnitt (9) befestigt ist, wenn die zweiten Befestigungsmittel (12) in die erste Position geschwenkt sind; und wobei
14.7 die zweite Kante (102) des Solarmoduls (100) durch die zweiten Befestigungsmittel (12) am zweiten Befestigungsabschnitt (9) befestigt ist, wenn die zweiten Befestigungsmittel (12) in die zweite Position geschwenkt sind.

## Claims

1. A mounting structure (1) for mounting at least one solar module (100) on a surface, wherein the mounting structure (1) comprises the following features:
1.1 a mounting body (2) that can be placed on a surface, comprising
1.1.1 a first fastening section (8) and
1.1.2 a second fastening section (9); wherein
1.1.3 the first fastening section (8) is configured to accommodate a first edge (101) of a solar module (100), and
1.1.4 the second mounting section (9) is configured to accommodate a second edge (102) of the solar module (100), which is opposite the first edge (101);
1.2 first fastening means (10) by which the first edge (101) of the solar module (100) can be fastened to the first fastening section (8); and
1.3 second fastening means (12) by which the second edge (102) of the solar module (100) can be fastened to the second fastening section (9);
1.4 wherein the second fastening means (12) are pivotable between a first position and a second position; and wherein
1.5 the second edge (102) of the solar module (100) cannot be fastened to the second fastening section (9) by the second fastening means (12) when the second fastening means (12) are pivoted into the first position; and wherein
1.6 the second edge (102) of the solar module (100) can be fastened to the second fastening section (9) by the second fastening means when the second fastening means (12) are pivoted into the second position;
**characterized in that**
1.7 the second fastening means are in the form of at least one swivel latch (12).

2. The mounting structure (1) according to claim 1, wherein the mounting body (2) is formed as a single piece.

3. The mounting structure (1) according to at least one of the preceding claims, wherein the mounting body (2) is formed as a one-piece stamped aluminum part.

4. The mounting structure (1) according to at least one of the preceding claims, wherein the first fastening section (8) extends deeper than the second fastening section (9) when the mounting body (2) is placed on a surface.

5. The mounting structure (1) according to at least one of the preceding claims, wherein the mounting body (2) comprises a central section (3), a first lateral section (4), and a second lateral section (5), wherein the first lateral section (4) and the second lateral section (5) project from the central section (3) on opposite sides thereof, wherein the first fastening section (8) is arranged on the first lateral section (4) and the second fastening section (9) is arranged on the second lateral section (5), and wherein the central section (3) can be placed on a surface.

6. The mounting structure (1) according to claim 5, wherein the first lateral section (4) has a first outer edge (6) and the second lateral section (5) has a second outer edge (7), and wherein the first fastening section (8) is arranged in the region of the first outer edge (6) and the second fastening section (9) is arranged in the region of the second outer edge (7).

7. The mounting structure (1) according to claim 6, wherein the first outer edge (6) and the second outer edge (7) run parallel to one another.

8. The mounting structure (1) according to at least one of the preceding claims, wherein the first fastening means (10) is formed in the mounting body (2).

9. The mounting structure (1) according to at least one of the preceding claims, wherein the first fastening means is formed as a groove-shaped receptacle (10).

10. The mounting structure (1) according to claim 9, wherein the first edge (101) of the solar module (100) can be received in the groove-shaped receptacle (10).

11. The mounting structure (1) according to at least one of the preceding claims, wherein a stop edge (11) is formed in the region of the second fastening section (9), against which a solar module (100) can abut with its second edge (102).

12. The mounting structure (1) according to at least one of the preceding claims, wherein the second fastening means are arranged on the second fastening section (9).

13. A method for mounting at least one solar module (100) on a mounting structure (1) according to at least one of the preceding claims, wherein the method comprises the following features:
A. providing a mounting structure (1) according to at least one of the preceding claims;
B. providing at least one solar module (100);
C. arranging the first edge (101) of the solar module (100) at the first fastening section (8) and arranging the second edge (102) of the solar module (100) at the second fastening section (9);
D. fastening the first edge (101) of the solar module (100) to the first fastening section (8) by the first fastening means; and
E. fastening the second edge (102) of the solar module (100) to the second mounting section (9) by the second fastening means (12) by pivoting the second fastening means (12) from the first position to the second position.

14. The mounting structure (1) according to at least one of claims 1 through 12, further comprising:
14.1 at least one solar module (100); wherein
14.2 the solar module (100) is mounted with its first edge (101) on the first fastening section (8), and
14.3 is mounted with its second edge (102) on the second fastening section (9); and wherein
14.4 the first edge (101) of the solar module (100) can be secured to the first fastening section (8) by the first fastening means (10); and
14.5 the second edge (102) of the solar module (100) can be secured to the second fastening section (9) by the second fastening means (12); wherein
14.6 the second edge (102) of the solar module (100) is not secured to the second fastening section (9) by the second fastening means (12) when the second fastening means (12) are pivoted to the first position; and wherein
14.7 the second edge (102) of the solar module (100) is secured to the second fastening section (9) by the second fastening means (12) when the second fastening means (12) are pivoted to the second position.

## Revendications

1. Dispositif de support (1), destiné à poser au moins un module solaire (100) sur une surface d'appui, le dispositif de support (1) comprenant les caractéristiques suivantes :
1.1 un corps de support (2), pouvant être posé sur une surface d'appui, comprenant
1.1.1 une première section de fixation (8) et
1.1.2 une deuxième section de fixation (9) ;
1.1.3. la première section de fixation (8) étant conçue pour y placer une première arête (101) d'un module solaire (100) et
1.1.4 la deuxième section de fixation (9) étant conçue pour y placer une deuxième arête (102), du module solaire (100), disposée à l'opposée de la première arête (101) ;
1.2 des premiers moyens de fixation (10), par lesquels la première arête (101) du module solaire (100) peut être fixée sur la première section de fixation (8) ; et
1.3 des deuxièmes moyens de fixation (12), par lesquels la deuxième arête (102) du module solaire (100) peut être fixée sur la deuxième section de fixation (9) ;
1.4 les deuxièmes moyens de fixation (12) pouvant pivoter dans une première position et dans une deuxième position ; et
1.5 la deuxième arête (102) du module solaire (100) ne pouvant pas être fixée sur la deuxième section de fixation (9) par les deuxièmes moyens de fixation (12), lorsque les deuxièmes moyens de fixation (12) sont pivotés dans la première position ; et
1.6 la deuxième arête (102) du module solaire (100) pouvant être fixée par les deuxièmes moyens de fixation sur la deuxième section de fixation (9), lorsque les deuxièmes moyens de fixation (12) sont pivotés dans la deuxième position ;
**caractérisé en ce que**
1.7 les deuxièmes moyens de fixation se présentent sous la forme d'au moins un dispositif de fermeture (12) pivotant.

2. Dispositif de support (1) selon la revendication 1, le corps de support (2) étant conçu en monobloc.

3. Dispositif de support (1) selon au moins l'une quelconque des revendications précédentes, le corps de support (2) étant conçu en tant que pièce aluminium découpée en monobloc.

4. Dispositif de support (1) selon au moins l'une quelconque des revendications précédentes, la première section de fixation (8) s'étendant à un niveau plus profond que la deuxième section de fixation (9), lorsque le corps de support (2) est posé sur une surface d'appui.

5. Dispositif de support (1) selon au moins l'une quelconque des revendications précédentes, le corps de support (2) comprenant une section (3) centrale, une première section (4) latérale et une deuxième section (5) latérale, la première section (4) latérale et la deuxième section (5) latérale débordant de la section (3) centrale, sur des côtés opposés de celle-ci, la première section de fixation (8) étant placée sur la première section (4) latérale et la deuxième section de fixation (9) étant placée sur la deuxième section (5) latérale et la section (3) centrale pouvant se poser sur une surface d'appui.

6. Dispositif de support (1) selon la revendication 5, la première section (4) latérale comportant une première arête extérieure (6) et la deuxième section (5) latérale comportant une deuxième arête extérieure (7) et la première section de fixation (8) étant placée dans la zone de la première arête extérieure (6) et la deuxième section de fixation (9) étant placée dans la zone de la deuxième arête extérieure (7).

7. Dispositif de support (1) selon la revendication 6, la première arête extérieure (6) et la deuxième arête extérieure (7) s'étendant à la parallèle l'une de l'autre.

8. Dispositif de support (1) selon au moins l'une quelconque des revendications précédentes, le premier moyen de fixation (10) étant façonné dans le corps de support (2).

9. Dispositif de support (1) selon au moins l'une quelconque des revendications précédentes, le premier moyen de fixation étant façonné en tant que logement (10) en forme de rainure.

10. Dispositif de support (1) selon la revendication 9, la première arête (101) du module solaire (100) pouvant être reçue dans le logement (10) en forme de rainure.

11. Dispositif de support (1) selon au moins l'une quelconque des revendications précédentes, dans la zone de la deuxième section de fixation (9) étant façonnée une arête de butée (11), contre laquelle un module solaire (100) peut buter par sa deuxième arête (102).

12. Dispositif de support (1) selon au moins l'une quelconque des revendications précédentes, les deuxièmes moyens de fixation étant placés sur la deuxième section de fixation (9).

13. Procédé, destiné à placer au moins un module solaire (100) sur un dispositif de support selon au moins l'une quelconque des revendications précédentes, le procédé comprenant les étapes suivantes, consistant à :
A. mettre à disposition un dispositif de support (1) selon au moins l'une quelconque des revendications précédentes ;
B. mettre à disposition au moins un module solaire (100) ;
C. placer la première arête (101) du module solaire (100) sur la première section de fixation (8) et placer la deuxième arête (102) du module solaire (100) sur la deuxième section de fixation (9) ;
D. fixer la première arête (101) du module solaire (100) sur la première section de fixation (8) au moyen des premiers moyens de fixation ; et
E. fixer la deuxième arête (102) du module solaire (100) sur la deuxième section de fixation (9) au moyen des deuxièmes moyens de fixation (12), en faisant pivoter les deuxièmes moyens de fixation (12) de la première position dans la deuxième position.

14. Dispositif de support (1) selon au moins l'une quelconque des revendications 1 à 12, comprenant par ailleurs :
14.1 au moins un module solaire (100) ;
14.2 le module solaire (100) étant reçu par la première arête (101) sur la première section de fixation (8) et
14.3 étant reçu par sa deuxième arête (102) sur la deuxième section de fixation (9) ; et
14.4 la première arête (101) du module solaire (100) pouvant se fixer par les premiers moyens de fixation (10) sur la première section de fixation (8) ; et
14.5 la deuxième arête (102) du module solaire (100) pouvant se fixer par les deuxièmes moyens de fixation (12) sur la deuxième section de fixation (9) ;
14.6 la deuxième arête (102) du module solaire (100) n'étant pas fixée par les deuxièmes moyens de fixation (12) sur la deuxième section de fixation (9), lorsque les deuxièmes moyens de fixation (12) sont pivotés dans la première position ; et
14.7 la deuxième arête (102) du module solaire (100) étant fixée par les deuxièmes moyens de fixation (12) sur la deuxième section de fixation (9), lorsque les deuxièmes moyens de fixation (12) sont pivotés dans la deuxième position.
